# EUROPÄISCHE PATENTSCHRIFT

(11) **EP 1 572 594 B1**
(45) Veröffentlichungstag und Bekanntmachung des Hinweises auf die Patenterteilung: **11.10.2006**
(21) Anmeldenummer: 03785897.4
(22) Anmeldetag: 19.12.2003
(51) Int. Cl.: C03B 23/02, C03B 11/08, B29D 11/00

(54) **VERFAHREN ZUM NACHBEHANDELN EINER OPTISCHEN LINSE**
METHOD FOR AFTERTREATING AN OPTICAL LENS
PROCEDE DE POST-TRAITEMENT D'UNE LENTILLE OPTIQUE

(30) Priorität: 20.12.2002 DE 10259890
(43) Veröffentlichungstag der Anmeldung: 14.09.2005
(73) Patentinhaber: Fraunhofer-Gesellschaft zur Förderung der angewandten Forschung e.V., 80686 München (DE)
(72) Erfinder: QUENZER, Hans-Joachim, 25524 Itzehoe (DE); MERZ, Peter, 25557 Hanerau-Hademarschen (DE); BOTT, Uwe, 25557 Hademaeschen (DE)
(74) Vertreter: Rösler, Uwe
(86) Internationale Anmeldenummer: PCT/EP2003/014629
(87) Internationale Veröffentlichungsnummer: WO 2004/056715

(56) Entgegenhaltungen:
- GB-A- 2 264 890
- SCHULZE J ET AL: "Compact self-aligning assemblies with refractive microlens arrays made by contactless embossing" PROC. SPIE - INT. SOC. OPT. ENG. (USA), PROCEEDINGS OF THE SPIE - THE INTERNATIONAL SOCIETY FOR OPTICAL ENGINEERING, 1998, SPIE-INT. SOC. OPT. ENG, USA, Bd. 3289, April 1998 (1998-04), Seiten 22-32, XP0008003397 ISSN: 0277-786X
- PATENT ABSTRACTS OF JAPAN Bd. 0181, Nr. 26 (P-1702), 2. März 1994 (1994-03-02) & JP 5 313003 A (MATSUSHITA ELECTRIC IND CO LTD), 26. November 1993 (1993-11-26)
- PATENT ABSTRACTS OF JAPAN Bd. 0111, Nr. 32 (C-417), 24. April 1987 (1987-04-24) & JP 61 266322 A (CANON INC), 26. November 1986 (1986-11-26)
- PATENT ABSTRACTS OF JAPAN Bd. 0080, Nr. 19 (C-207), 26. Januar 1984 (1984-01-26) & JP 58 185445 A (FUJITSU KK), 29. Oktober 1983 (1983-10-29)

## Beschreibung

### Technisches Gebiet

Die Erfindung bezieht sich auf ein Verfahren sowie die Verwendung einer Vorrichtung zum Nachbehandeln der Oberflächenkontur wenigstens einer aus Glas oder glasartigem Material bestehenden optischen Linse, insbesondere Mikrolinse, mit einer konvex ausgebildeten Linsenoberfläche, die von einer Umfangslinie begrenzt wird, an die sich ein ebener die Umfangslinie umgebender Flächenabschnitt anschließt.

### Stand der Technik

Aus der WO 01/38240 A1 geht ein Verfahren zur Herstellung von mikromechanischen aber insbesondere mikrooptischen Bauelementen in Form von Mikrolinsen aus glasartigen Material hervor, die jeweils eine Einzelelementgröße aufweisen, die bis in den Sub-Mikrometer-Bereich hineinreicht. Zur Herstellung einer derartigen arrayförmig angeordneten Mikrolinsenanordnung dient eine vorzugsweise aus Halbleitermaterial vorstrukturierte Negativform mit einer Vielzahl von Vertiefungen, über die eine Schicht aus Glasmaterial aufgebracht und bevorzugt im Wege anodischen Bondens mit der Negativform verbunden wird. Im Rahmen eines nachfolgenden Temperverfahrens, bei dem der Verbund aus der Negativform und der Schicht aus Glasmaterial über die Erweichungstemperatur des Glasmaterials erwärmt wird, beginnt das Glasmaterial lokal in die Vertiefungen zu fließen. Über die Einsinktiefe, über die das Glasmaterial lokal in die einzelnen Vertiefungen im Wege eines sogenannten Flow-Prozesses eindringt, kann die Brennweite der einzelnen sich ausbildenden Mikrolinsen bestimmt werden, die durch Temperatur, Druck und Temperzeit während des Temperschrittes exakt eingestellt werden kann.

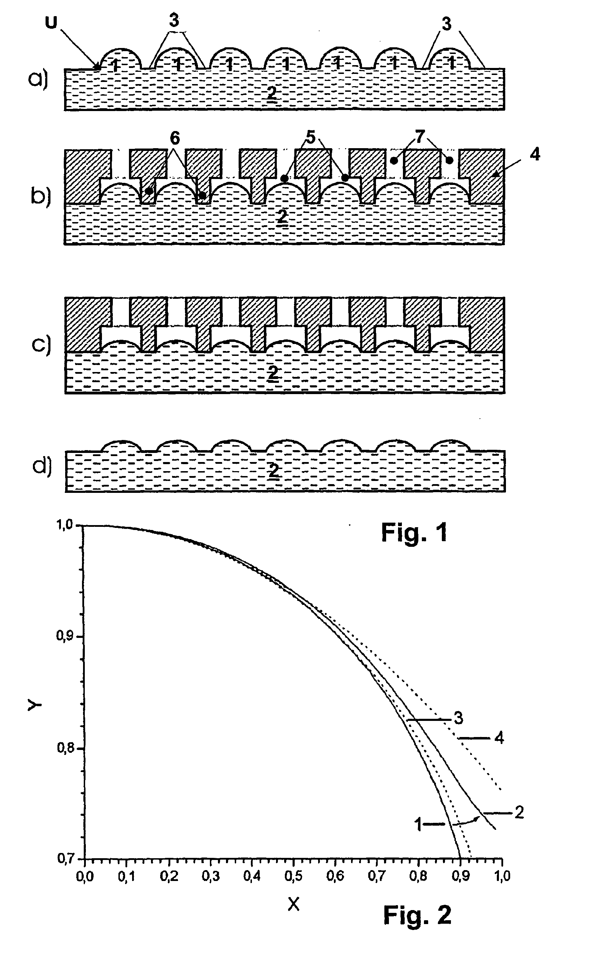

Eigentümlicherweise zeigen die mittels eines derartigen "Glasflowprozesses" hergestellten Mikrolinsen eine am Randbereich jeder einzelnen Linse eine elliptische Übersteilung, wie sie unter Bezugnahme auf Figur 2 im einzelnen hervorgeht. In Figur 2 ist in einem zweidimensionalen Koordinatensystem eine Schar von Linienzüge 1-4 dargestellt, die jeweils den hälftigen Querschnitt einer Mikrolinse repräsentieren. Alle vier Linienzüge weisen bei X = 0 den gleichen Mittenkrümmungsradius auf, weichen jedoch im Randbereich der jeweiligen Linsenkontur voneinander ab. Der Linienzug 1 entspricht dabei jenem Linsenquerschnitt, der durch den vorstehend geschilderten Glasflowprozess gewonnen wird. Vergleicht man bspw. den Linienquerschnitt 1 mit einer als Linienzug 3 eingezeichneten Sphäre, so wird deutlich, dass der Randbereich des Linienzuges 1 von der Sphäre 3 insbesondere im Randbereich der Mikrolinse deutlich zu kleineren Krümmungsradien abweicht, nämlich eine, wie man sagt elliptische Übersteilung, aufweist.

Diese im Randbereich elliptische Überstellung der Mikrolinse ist das Resultat einer verfahrensimmanenten Eigenschaft, die charakteristisch für Glasflowprozesse ist und aus diesem Grunde unvermeidbar auftritt. Ähnliche elliptische Übersteilungen sind überdies auch bei Mikrolinsen zu beobachten, die im Wege des sogenannten kontaktlosen Heißprägeverfahrens aus thermoplastischen Linsenmaterialien hergestellt worden sind. Insbesondere in Fällen, in denen derartig hergestellte Mikrolinsen für optische Abbildungen eingesetzt werden, bei denen die gesamte Linsenoberfläche zur Abbildung genutzt wird, führen die elliptischen Übersteilungen zu nachteilhaften Abbildungsfehlern, die es zu vermeiden gilt.

Aus der JP-A-5313003 ist eine Vorrichtung zur Herstellung von Glasmikrolinsen bekannt. Die Vorrichtung sicht ein in Art einer Schablone ausgebildetes Mittel mit Durchgangsöffnungen vor.

### Darstellung der Erfindung

Es besteht die Aufgabe optische Linsen, insbesondere Mikrolinsen, deren Linsenquerschnittsform insbesondere im Randbereich herstellungsbedingt elliptische Übersteilungen aufweisen, derart zu behandeln, dass die mit den elliptischen Übersteilungen verbundenen nachhaltigen optischen Abbildungseigenschaften vollständig vermieden werden können. Die zur Vermeidung der elliptischen Übersteilungen zu treffenden Massnahmen sollen keine technisch aufwendigen und teuren Verfahrensschritte erfordern und überdies auch an bereits hergestellten Mikrolinsen nachträglich anwendbar sein.

Die Lösung der der Erfindung zugrunde liegenden Aufgabe ist im Anspruch 1 angegeben. Gegenstand des Anspruches 12 ist eine erfindungsgemäße Verwendung einer Vorrichtung mit der die vorstehenden elliptischen Übersteilungen im Randbereich von Mikrolinsenanordnungen zu beseitigen sind. Den Erfindungsgedanken vorteilhaft weiterbildende Merkmale sind überdies Gegenstand der Unteransprüche sowie der Beschreibung unter Bezugnahme auf die Ausführungsbeispiele zu entnehmen.

Ausgehend von den gemäß dem Stand der Technik hergestellten optischen Linsen, vorzugsweise Mikrolinsenarrays, die im Wege eines Glasflowprozesses gewonnen werden, bspw. mit dem in der WO 01/38240 A1 beschriebenen Verfahren, werden die eine elliptisch übersteilte Linsenquerschnittsform aufweisende Linsen einem erfindungsgemäß ausgebildeten Nachbehandlungsschritt unterworfen, bei dem zumindest die elliptische Übersteilung im Randbereich jeder einzelnen Mikrolinse kontrolliert beseitigt wird.

Das erfindungsgemäße Verfahren zur Nachbehandlung der Oberflächenkontur wenigstens einer aus Glas oder glasartigem Material bestehenden optischen Linse, insbesondere Mikrolinse, mit einer konvex ausgebildeten Linsenoberfläche, die von einer Umfangslinie begrenzt wird, an die sich ein ebener die Umfangslinie umgebender Flächenabschnitt anschließt, weist zumindest folgende zwei Verfahrensschritte auf:
Zunächst wird längs der Umfangslinie der zu behandelnden optischen Linse auf den die Linse umgebenden ebenen Flächenabschnitt ein an die Umfangslinie linientreu angepasstes, die konvex ausgebildete Linsenoberfläche zumindest seitlich begrenzendes Mittel aufgesetzt. Das schablonenartig ausgebildete Mittel, das vorzugsweise aus einem Material gefertigt ist, dessen thermische Ausdehnungseigenschaften identisch oder sehr ähnlich den thermischen Ausdehnungseigenschaften des zu behandelnden Linsenmaterials ist, ist in einer einfachsten Ausführungsvariante als bloße Lochschablone ausgebildet, deren lochförmige Ausnehmung exakt an die Form und Größe der Umfangslinie angepasst ist. Auf diese Weise wird die konvex ausgebildete Linsenoberfläche seitlich bzw. lateral von dem Mittel begrenzt, tritt jedoch ansonsten mit dem Mittel nicht in Berührung. Nachfolgend wird die optische Linse auf eine Temperatur von wenigstens der Transformationstemperatur des Glases oder glasartigen Materials erhitzt, wodurch das Linsenmaterial erweicht und in Folge der längs der Linsenoberfläche herrschenden Oberflächenspannung lokal verdrängt wird, sodass es zu einem Materialfluss innerhalb des Linsenkörpers kommt. Hierbei gilt es einen Druckausgleich zwischen der Linsenober- und Linsenunterseite zu schaffen.

So vermögen die im Zustand der Linsenmaterialerweichung längs der konvex ausgebildeten Linsenoberfläche wirkenden Oberflächenspannungen die Linsenoberfläche tendentiell zu verkleinern, wobei Linsenmaterial aus dem Bereich der konvexseitigen Linsenüberhöhung in den übrigen Bereich des Linsenkörpers verdrängt wird bzw. zurückfließt. Durch diesen auch als Reflow-Prozess genannten Tempervorgang werden die vorstehend beschriebenen randseitigen elliptischen Übersteilungen vermindert bzw. vollständig vermieden. Durch entsprechende Vorgabe bestimmter den Temperprozess bestimmenden Prozessparameter wie Druck, Temperatur und Temperzeit, können insbesondere die Randbereiche der zu behandelnden Mikrolinse sphärische, parabolische oder gar hyperbolische Randkonturgeometrien annehmen, wie es im einzelnen aus den weiteren Ausführungen zu entnehmen ist.

Nach Erreichen der gewünschten Randgeometrie wird der Temperprozess beendet und nach entsprechender Abkühlung der optischen Linse unter die Transformationstemperatur von dem schablonenartig aufgesetzten Mittel entsprechend getrennt.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a - d: schematisierte Prozessschritte zur Durchführung des thermischen Reflowprozesses sowie
- Fig. 2: Diagramm zur Darstellung unterschiedlicher Linsenquerschnittsformen.

### Wege zur Ausführung der Erfindung, gewerbliche Verwendbarkeit

In Figur 1 a ist eine stilisierte Querschnittsdarstellung durch ein Mikrolinsenarray gezeigt, das 7 nebeneinander in Reihe angeordnete Mikrolinsen 1 vorsieht und vorzugsweise im Wege eines Glas-Flow-Prozesses hergestellt worden ist. Die einzelnen Mikrolinsen 1 erheben sich über die Ebene des die einzelnen Mikrolinsen 1 miteinander verbindenden Glaslinsensubstrats 2, das vorzugsweise aus Bor-Silicat-Glas, bspw. Pyrex®-Glas besteht. Jede der einzelnen Mikrolinsen 1 ist von einer Umfangslinie U begrenzt, an die sich jeweils ein eben ausgebildetes Flächenstück 3 anschließt, das zwei unmittelbar benachbarte Mikrolinsen 1 räumlich voneinander beabstandet. Wie bereits vorstehend erwähnt, sind die Randbereiche der einzelnen Mikrolinsen 1 aufgrund ihres Herstellungsprozesses elliptisch übersteilt, d.h. die Oberflächenkontur jeder einzelnen Mikrolinse weicht jeweils in ihrem Randbereich von einer idealen Sphäre hin zu kleineren Linsenradien ab. Eine derartige Konturbeschaffenheit insbesondere im Randbereich jeder einzelnen Linse kann im Einzelnen unter Bezugnahme auf die Diagrammdarstellung in Figur 2 entnommen werden, die gemäß Konturlinie 1 eine gegenüber einer sphärischen Linsenkontur (siehe hierzu Linienzug 3) im Linsenrandbereich eine elliptische Übersteilung aufweist. Die Ursache für eine derartige elliptische Übersteilung ist im Einströmverhalten des fließfähigen Linsenmaterials in die schablonenhaft vorgegebenen Vertiefungen einer strukturierten Maske begründet, das sich bei der Linsenherstellung im Rahmen eines Glas-Flow-Prozesses einstellt.

Um nun die im Randbereich auftretende elliptische Übersteilung zu vermindern bzw. vollständig zu beseitigen, wird gemäß Bilddarstellung in Figur 1 b ein als Gegenwerkzeug 4 ausgebildetes Mittel auf das Mikrolinsenarray aufgesetzt, das in der Form komplementär zum Mikrolinsenarray ausgebildete ist und die einzelnen optischen Mikrolinsen 1 längs ihrer Umfangslinien U umschließt. Das Gegenwerkzeug 4 ist im einfachsten Fall in Form einer schablonenhaft ausgebildeten Lochblende ausgeführt, mit Lochausnehmungen, deren Lochkontur an die Form und Größe der Umfangslinien der einzelnen Mikrolinsen angepasst sind.

Das in Figur 1 b dargestellte Gegenwerkzeug 4 weist stilisiert komplementär zu der konvexen Linsenform der Mikrolinsen 1 eingearbeitete Ausnehmungen 5 auf, in deren Raumbereiche 6 sich jeweils die konvex ausgebildeten Linsenoberflächen der Mikrolinsen 1 erstrecken. Die ansonsten stegförmig ausgebildeten Zwischenabschnitte 6 des Gegenwerkzeuges 4 sind konturgetreu an die zwischen den Mikrolinsen 1 befindlichen Flächenabschnitte 3 angepasst und decken diese bei Inkontaktbringen mit dem Glassubstrat 2 konturgetreu ab.

Um einen möglichst innigen Kontakt zwischen dem Gegenwerkzeug 4 und dem Linsensubstrat 2 herzustellen, wird das Gegenwerkzeug 4 auf die Flächenbereiche 3 des Linsensubstrates 2 verpresst oder im Wege eines anodischen Bondens mit diesem fest verfügt. Zur Vermeidung eines sich zwischen dem Glassubstrat 4 und dem Linsensubstrat 2 innerhalb der Raumbereiche 5 während des gegenseitigen Inkontaktbringens ausbildenden Überdrucks, sind Öffnungen 7 innerhalb des Gegenwerkzeuges 4 vorgesehen, um einen Druckausgleich zwischen der Innenseite und der Außenseite des Gegenwerkzeuges 4 zu schaffen. Ebenso ist es möglich, wie im weiteren noch auszuführen ist, dass über die Öffnungen 7 gezielt einstellbare Druckbedingungen unmittelbar auf die konvex ausgebildeten Linsenoberflächen der einzelnen Mikrolinsen einwirken können.

Für den Fall, dass die im weiteren beschriebene Temperaturbehandlung unter Vakuumbedingungen durchgeführt wird, ist der Einsatz eines Gegenwerkzeuges denkbar, dessen einzelne Vertiefungen keine Öffnungen aufweisen, zumal unter Vakkuumbedingungen die vorstehend aufgezeigte Druckproblematik nicht auftritt.

In einem weiteren Verfahrensschritt wird der Verbund aus Linsensubstrat 2 und Gegenwerkzeug 4 einer Temperaturbehandlung weit oberhalb der Übergangstemperatur bzw. Transformationstemperatur des Glases ausgesetzt, wodurch die herrschende Oberflächenspannung eine Veränderung der Profilform jeder einzelnen Mikrolinse dahingehend bewirkt, dass die elliptische Übersteilung im Randbereich einer jeden einzelnen Mikrolinse regelrecht eingeebnet bzw. in eine gegenförmig gekrümmte Profilform überführt wird. Gemäß Bilddarstellung in Figur 1 c verhindert dabei das Gegenwerkzeug 4 ein seitliches Auslaufen der einzelnen Mikrolinsen, so dass die lateralen Geometrieabmessungen jeder einzelnen Mikrolinse während der Temperaturbehandlung erhalten bleiben. Durch die horizontale Anordnung des Mikrolinsenarrays während der Temperaturbehandlung sowie der oberflächenreduzierende Effekt der die Linsenoberfläche bestimmenden Oberflächenspannung bildet sich eine Materialverdrängung aus jedem einzelnen Linsenkörper in Richtung des darunter befindlichen Flächensubstrates aus. Dieser auch als Reflow-Prozess bezeichnete Materialfluss führt grundsätzlich zu einer gesamtheitlichen Veränderung der Oberflächenkontur jeder einzelnen Mikrolinse, trägt aber insbesondere zur Abflachung des Profils im Randbereich jeder einzelnen Mikrolinse bei. Je nach Temperaturniveau und Temperzeit lassen sich durch den Reflow-Prozess gewünschte Randabflachungen, die aus der Diagrammdarstellung gemäß Figur 2 im einzelnen entnehmbar sind, erzeugen. Ausgehend von der elliptisch übersteilten Randform gemäß dem Linienzug 1 können sphärische Randkonturen gemäß Linienzug 3, parabolische oder gar hyperbolische Randkonturen gemäß den Linienzügen 2 und 4 gezielt erzeugt werden. Je länger der Temperprozess andauert, um so mehr wird der Randbereich jeder einzelnen Mikrolinse abgeflacht und kann letztlich eine gemäß Linienzug 4 angedeutete Oberflächenkontur annehmen.

Unter normalen Prozessbedingungen findet der vorstehend bezeichnete Reflow-Prozess unter Normaldruckbedingungen statt, so dass die den Materialfluss induzierende Kraft ausschließlich auf die wirkende Oberflächenspannung in jeder einzelnen Mikrolinse zurückzuführen ist. Darüber hinaus ist es überdies möglich, die Druckbedingungen während des Temperprozesses zu verändern. So bewirkt eine Druckzunahme, die gleichmäßig auf jede einzelne Linsenoberfläche einwirkt, eine den Reflow-Prozess unterstützende Kraftkomponente, die zu einer verstärkten Abflachung des Linsenprofils führt. Reduziert man hingegen den auf die Linsenoberfläche einwirkenden Druck so wird eine dem Reflow-Prozess entgegenwirkende Kraftkomponente erzeugt, durch die bspw. die konvex ausgebildete Linsenoberfläche während des Tempervorganges stabilisiert wird. Somit stellen Temperatur, Temperzeit und der auf die Linsenoberflächen einwirkende Druck entscheidende Prozessparameter dar, die in Abhängigkeit eines gewünschten Tempererfolges individuell einzustellen sind.

Wie bereits erwähnt, tritt das Gegenwerkzeug 4 ausschließlich längs der Umfangslinien sowie über die zwischen den Mikrolinsen angeordneten Flächenbereichen 3 mit dem Mikrolinsenarray in Berührung. Die Randbereiche des Gegenwerkzeuges, die jeweils mit den Umfangslinien jeder einzelnen Mikrolinse in Berührung treten dürfen jedoch mit dem Rand jeder einzelnen Mikrolinse nicht benetzend in Berührung treten, da in diesem Falle zusätzliche Randwinkeleffekte auftreten könnten, die die Linsenoberflächenkontur im Randbereich nachhaltig beeinträchtigen zu können. Um dafür Sorge zu tragen, dass das Gegenwerkzeug vom Linsenmaterial im Randbereich nicht benetzt wird, hat es sich als günstig erwiesen, das Gegenwerkzeug bspw. aus Graphit zu fertigen. Graphit überdauert zum einen die während der Temperaturbehandlung auftretenden Temperaturen ca. zwischen ca. 600 und 800° C schadlos und besitzt zum anderen die Eigenschaft, von erweichtem Glas nicht benetzt zu werden. Überdies haben Untersuchungen ergeben, dass ein aus Silizium gefertigtes Gegenwerkzeug gleichsam keine Benetzungseffekte mit dem erweichten Linsenmaterial zeigt, da im Falle von Glas als Linsenmaterial das Glas nicht direkt in Kontakt mit dem Siliziumwerkzeug tritt, zumal sich zwischen dem fließenden Glas und dem Siliziumwerkzeug eine Zwischenschicht ausbildet, die zwar ebenso aus Glas besteht, jedoch über eine deutlich höhere Viskosität verfügt, als das eigentliche Glassubstrat selbst und damit nicht oder kaum fließt. Der Grund für das Auftreten einer derartigen Zwischenschicht liegt nach derzeitiger Kenntnis an einer lokalen Veränderung der Zusammensetzung des Glases, das im Wege des anodischen Bondens in Kontakt mit der Siliziumoberfläche gebracht wird. Hierbei wandern lokal Natriumionen aus dem Glas, die für die Viskosität des Glases bestimmend zu sein scheinen.

Nach erfolgter Temperaturbehandlung und entsprechendem Erkalten des Linsenmaterials, wird das Gegenwerkzeug 4 von der Oberfläche des Mikrolinsenarrays entfernt. Das vorzugsweise aus Silizium gefertigte Gegenwerkzeug lässt sich bspw. unter Verwendung ansich bekannter Ätztechniken vom Mikrolinsenarray entfernen. Möglicherweise an der Rückseite des Linsensubstrates auftretende Unebenheiten, die durch den Reflow-Prozess während der Temperaturbehandlung entstanden sind, können mit geeigneten mechanischen Schleif- oder Poliertechniken ausgeglichen werden.

### Bezugszeichenliste

- 1: Mikrolinse
- 2: Linsensubstrat
- 3: Flächenanteile
- 4: Gegenwerkzeug
- 5: Raumbereiche
- 6: Stegartige Abschnitte
- 7: Durchgangsöffnungen

## Patentansprüche

1. Verfahren zum Nachbehandeln der Oberflächenkontur wenigstens einer aus Glas oder glasartigem Material bestehenden optischen Linse, insbesondere Mikrolinse (1), mit einer konvex ausgebildeten Linsenoberfläche, die von einer Umfangslinie begrenzt wird, an die sich ein ebener die Umfangslinie umgebender Flächenabschnitt (3) anschließt, sowie einer der konvex ausgebildeten Linsenoberfläche gegenüberliegen Linsenunterseite,
**dadurch gekennzeichnet, dass** längs der Umfangslinie der optischen Linse auf den Flächenabschnitt (3) ein an die Umfangslinie linientreu angepaßtes, die konvex ausgebildete Linsenoberfläche zumindest seitlich begrenzendes Mittel (4) aufgesetzt wird,
dass die optische Linse auf eine Temperatur von wenigstens der Transformationstemperatur des Glases oder glasartigen Materials erhitzt wird,
dass ein Druckausgleich zwischen der konvex ausgebildeten Linsenoberfläche und der Linsenunterseite vorherrscht, und
dass nach einer bestimmten Zeitdauer, während der die optische Linse der Temperaturbehandlung ausgesetzt wird, und nachfolgender Abkühlung unter die Transformationstemperatur das Mittel von der optischen Linse entfernt wird.

2. Verfahren nach Anspruch 1,
**dadurch gekennzeichnet, dass** die Temperatur und Zeitdauer für die Temperaturbehandlung vom Grad der Veränderung der Oberflächenkontur gewählt wird.

3. Verfahren nach Anspruch 1 oder 2,
**dadurch gekennzeichnet, dass** während der Temperaturbehandlung ein auf die konvex ausgebildete Linsenoberfläche einwirkender Druck variiert wird.

4. Verfahren nach Anspruch 3,
**dadurch gekennzeichnet, dass** die Druckänderung durch gezielte Gas- bzw. Luftdruckänderung herbeigeführt wird.

5. Verfahren nach einem der Ansprüche 1 bis 4,
**dadurch gekennzeichnet, dass** das Mittel fest gegen die Umfangslinie kraftbeaufschlagt gepresst wird.

6. Verfahren nach einem der Ansprüche 1 bis 5,
**dadurch gekennzeichnet, dass** die optische Linse im Wege eines Glasfließprozesses oder mittels kontaktlosem Heissprägen eines thermoplastischen Materials hergestellt wird und verfahrensbedingt eine im Bereich ihrer Umfangslinie elliptische Übersteilung aufweist, und
dass die Temperaturbehandlung in Verbindung mit dem die Umfangslinie begrenzenden Mittel derart durchgeführt wird, dass die elliptische Übersteilung vermindert oder gänzlich beseitigt wird.

7. Verfahren nach einem der Ansprüche 1 bis 6,
**dadurch gekennzeichnet, dass** die Temperaturbehandlung in Verbindung mit dem die Umfangslinie begrenzenden Mittel derart durchgeführt wird, dass die lateralen Geometrieabmessungen der optischen Linse erhalten bleiben.

8. Verfahren nach einem der Ansprüche 1 bis 7,
**dadurch gekennzeichnet, dass** die optische Linse während der Temperaturbehandlung horizontal gelagert wird, d.h. die konvex ausgebildete Linsenoberfläche ist gegenüber einer horizontalen Ebene erhaben.

9. Verfahren nach einem der Ansprüche 1 bis 8,
**dadurch gekennzeichnet, dass** das Mittel (4) mit der optischen Linse nicht oberflächenbenetzend in Berührung gebracht wird.

10. Verfahren nach einem der Ansprüche 1 bis 9,
**dadurch gekennzeichnet, dass** eine einstückig zusammenhängende arrayförmige Mikrolinsenanordnung vorgesehen wird, mit einer Vielzahl einzelner optischer Mikrolinsen (1), die über eben ausgebildete Flächenabschnitte (3), vorzugsweise äquidistant voneinander beabstandet sind,
dass ein an die Anordnung und Umfangsgröße der einzelnen Mikrolinsen (1) angepasstes Mittel (4) in Art einer Schablone vorgesehen wird, das auf die Flächenabschnitte (3) zumindest teilweise aufgesetzt wird und die Umfangslinien der einzelnen Mikrolinsen umfasst, und
dass während der Temperaturbehandlung alle Mikrolinsen einheitlich homogen erhitzt werden.

11. Verfahren nach einem der Ansprüche 1 bis 10,
**dadurch gekennzeichnet, dass** die Temperaturbehandlung derart erfolgt, dass eine Verkleinerung der konvexen Linsenoberfläche ausschließlich auf längs der konvex ausgebildeten Linsenoberfläche wirkenden Oberflächenspannungen beruht, wobei Linsenmaterial aus Bereichen der konvexseitigen Linsenüberhöhung in übrige Bereiche des Linsenkörpers verdrängt wird.

12. Verwendung einer Vorrichtung zum Nachbehandeln der Oberflächenkontur wenigstens einer aus Glas oder glasartigem Material bestehenden optischen Linse, insbesondere Mikrolinse (1), mit einer konvex ausgebildeten Linsenoberfläche, die von einer Umfangslinie begrenzt ist, an die sich ein ebener die Umfangslinie umgebender Flächenabschnitt (3) anschließt, wobei die Vorrichtung ein in Art einer Schablone ausgebildetes Mittel (4) mit einer Ausnehmung vorsieht, die von einem Rand begrenzt ist, der bündig an die Umfangslinie der optischen Linse angepasst ist, die Ausnehmung ansonsten derart ausgebildet ist, dass die Schablone berührungsfrei zur konvex ausgebildeten Linsenoberfläche auf den die Umfangslinie umgebenden Flächenabschnitt aufbringar ist, und das Mittel (4) wenigstens eine der Ausnehmung gegenüberliegende Öffnung (7) vorsieht, so dass zwischen der optischen Linse und dem Mittel nach Aufbringen des Mittels (4) auf den die Umfangslinie umgebenden Flächenabschnitt kein abgeschlossenes Volumen entsteht, zur Beseitigung einer am Randbereich der Linse vorhandenen elliptischen Übersteilung im Wege einer Temperaturbehandlung der optischen Linse, auf der das schablonenartige Mittel (4) aufsitzt und der Randbereich der optischen Linse im Wege eines Reflow-Prozesses abgeflacht wird, so dass eine sphärische oder parabolische Linsenquerschnittsform erhalten wird.

13. Verwendung nach Anspruch 12,
**dadurch gekennzeichnet, dass** bei andauerndem Reflow-Prozess eine hyperpolische Linsenquerschnittsform erhalten wird.

## Claims

1. A method for follow-up treatment of the contour of the surface of at least one optical lens, in particular a microlens (1) which is made of glass or a glass-type material and which has a convex lens surface delimited by a circumferential line abutting on a plane section (3) surrounding said circumferential line and which has a lens underside facing the convex lens surface,
wherein along said circumferential line of the optical lens on said plane section (3) is placed a means (4) perfectly matching said circumferential line and at least laterally bordering said convex lens surface,
heating said optical lens to a temperature of at least the transformation temperature of said glass or glass-type material,
pressure equalization prevails between said convex lens surface and said lens underside, and
cooling below said transformation temperature after a certain period of time, during which said optical lens undergoes said temperature treatment and
removing said means from said optical lens.

2. The method according to claim 1,
wherein the temperature and the period of time of said temperature treatment are selected according to the degree of change of the surface contour.

3. The method according to claim 1 or 2,
wherein a pressure acting on said convex lens surface is varied during said temperature treatment.

4. The method according to claim 3,
wherein said pressure change is brought about by changing the gas pressure, respectively air pressure.

5. The method according to one of the claims 1 to 4,
wherein said means is pressed with force firmly against said circumferential line.

6. The method according to one of the claims 1 to 5,
wherein said optical lens is produced by means of a glass-flow process or by means of contactless hot stamping of a thermoplastic material and has as a result of said process an extremely steep elliptical gradient in the region of said circumferential line, and
said temperature treatment is conducted in conjunction with said means bordering said circumferential line in such a manner that said extremely steep elliptical gradient is reduced or completely eliminated.

7. The method according to one of the claims 1 to 6,
wherein said temperature treatment is conducted in conjunction with said means bordering said circumferential line in such a manner that the lateral geometric dimensions of said optical lens are retained.

8. The method according to one of the claims 1 to 7,
wherein said optical lens is borne horizontally during said temperature treatment, i.e. the convex lens surface is raised above a horizontal plane.

9. The method according to one of the claims 1 to 8,
wherein said means (4) is brought into contact with said optical lens without wetting the surface.

10. The method according to one of the claims 1 to 9,
wherein a one-piece continuous array-like microlens arrangement is provided, having a multiplicity of single optical microlenses (1), which are spaced apart, preferably equidistant, by plane sections (3),
providing a means (4) matching the arrangement and size of the circumference of the single microlenses (1) as a sort of template, which is placed at least partly on said plane sections (3) and surrounds said circumferential lines of said individual microlenses, and
heating during said temperature treatment all said microlenses uniformly and homogeneously.

11. The method according to one of the claims 1 to 10,
wherein said temperature treatment occurs in such a manner that a reduction of said convex lens surface stems solely from the surface tensions acting along said convex lens surface, with the lens material being forced out of the regions of said exceedingly steep elliptical gradient on the convex-side into other regions of the lens body.

12. Use of a device for follow-up treatment of the contour of the surface of at least one optical lens, in particular a microlens (1) which is made of glass or a glass-type material having a convex shaped lens surface which is delimited by a circumferential line abutting on a plane section (3) surrounding said circumferential line, whereby said device is provided with a means (4) designed as a sort of template having a cutout bordered by an edge which is flush with said circumferential line of said optical lens, said cutout being otherwise designed in such a manner that said template is placeable without touching said convex lens surface on said plane section surrounding said circumferential line, and said means (4) provides at least one opening (7) opposite said cutout in such a manner that no closed volume occurs between said optical lens and said means (4) after placing said means (4) on said plane section surrounding said circumferential line, in order to eliminate said exceedingly steep elliptical gradient present at the edge region of said lens by means of a temperature treatment of said optical lens on which said template-like means lies and said edge region of said optical lens is leveled using a reflow process in such a manner that a spherical or parabolical shaped lens cross section is obtained..

13. The use according to claim 12,
wherein with a continuous reflow process, a hyperbolic shaped lens cross section is obtained.

## Revendications

1. Procédé pour retraiter le contour superficiel d'au moins une lentille optique en verre ou en matière vitreuse, notamment d'une microlentille (1), avec une surface de lentille conçue sous forme convexe, qui est délimitée par une ligne périphérique, sur laquelle se raccorde un méplat (3) entourant la ligne périphérique, ainsi qu'avec une face inférieure de lentille, opposée à la surface de lentille conçue sous forme convexe,
**caractérisé en ce qu'**on monte d'abord le long de la ligne périphérique de la lentille optique, sur le méplat (3) un moyen épousant fidèlement la ligne périphérique, délimitant au moins latéralement la surface de lentille conçue sous forme convexe,
**en ce qu'**on échauffe la lentille optique à une température correspondant au moins à la température de transformation du verre ou d'une matière vitreuse, **en ce qu'**une compensation de pression prédomine entre la surface de lentille conçue sous forme convexe et la face inférieure de la lentille,
**en ce que** après une période prédéfinie, pendant laquelle on soumet la lentille optique au traitement thermique, et après refroidissement consécutif à une température inférieure à la température de transformation, on retire le moyen de la lentille optique.

2. Procédé selon la revendication 1,
**caractérisé en ce qu'**on choisit la température et la durée du traitement thermique en fonction du degré de modification du contour superficiel.

3. Procédé selon la revendication 1 ou 2,
**caractérisé en ce que** pendant le traitement thermique, on fait varier une pression agissant sur la surface de la lentille, conçue de façon convexe.

4. Procédé selon la revendication 3,
**caractérisé en ce qu'**on provoque la modification de pression par modification adéquate de le pression gazeuse ou atmosphérique.

5. Procédé selon l'une quelconque des revendications 1 à 4,
**caractérisé en ce qu'**on presse solidement le moyen sous l'application d'une force contre la ligne périphérique.

6. Procédé selon l'une quelconque des revendications 1 à 5,
**caractérisé en ce qu'**on fabrique la lentille optique au moyen d'un processus d'écoulement gazeux ou au moyen d'un estampage à chaud sans contact d'une matière thermoplastique et en fonction du procédé, elle comporte dans la zone de ses lignes périphériques des surhaussements elliptiques, et
**en ce qu'**on procède au traitement thermique en association avec des moyens délimitant la ligne périphérique de façon à diminuer, voire à supprimer totalement le surhaussement elliptique.

7. Procédé selon l'une quelconque des revendications 1 à 6,
en ce qu'on procède au traitement thermique en association avec des moyens délimitant la ligne périphérique, de façon à conserver les dimensions géométriques latérales de la lentille optique.

8. Procédé selon l'une quelconque des revendications 1 à 7,
**caractérisé en ce que** pendant le traitement thermique horizontal, on loge la lentille optique à l'horizontale, c'est-à-dire que la surface de la lentille conçue sous forme convexe est en relief par rapport à un plan horizontal.

9. Procédé selon l'une quelconque des revendications 1 à 8,
**caractérisé en ce qu'**on met le moyen (4) en contact superficiel non mouillant avec la lentille optique.

10. Procédé selon l'une quelconque des revendications 1 à 9,
**caractérisé en ce qu'**on prévoit un agencement de microlentilles en forme de système, avec une pluralité de microlentilles (1) optiques individuelles, qui par l'intermédiaire d'un méplat (3) conçu de façon plane sont distancées mutuellement, de préférence de façon équidistante, **en ce qu'**on prévoit un moyen (4) adapté à l'agencement et à la dimension périphérique des microlentilles individuelles (1) du type d'un gabarit, que l'on applique au moins partiellement sur les méplats (3) et qui entoure la ligne périphérique des microlentilles individuelles, et **en ce qu'**on échauffe de façon homogène toutes les microlentilles, pendant le traitement thermique.

11. Procédé selon l'une quelconque des revendications 1 à 10,
**caractérisé en ce qu'**on effectue le traitement thermique de façon à ce qu'une réduction de la surface convexe de la lentille repose exclusivement sur des tensions superficielles agissant le long de la surface de lentille conçue sous forme convexe, de la matière de lentille étant refoulée de zones du surhaussement de lentille côté convexe dans les zones restantes du corps de lentille.

12. Utilisation d'un dispositif pour retraiter le contour superficiel d'au moins une lentille optique en verre ou en matière vitreuse, notamment d'une microlentille (1), avec une surface de lentille conçue sous forme convexe, qui est délimitée par une ligne périphérique, sur laquelle se raccorde un méplat (3) entourant la ligne périphérique, le dispositif prévoyant un moyen (4) conçu sous la forme d'un gabarit avec un évidement qui est délimité par une lisière qui est adaptée pour épouser la ligne périphérique de la lentille optique, l'évidement étant conçu par ailleurs pour permettre de monter le gabarit sans contact sur la surface de lentille conçue de façon convexe, sur le méplat délimitant la ligne périphérique, et le moyen (4) prévoyant au moins une ouverture (7) faisant face à l'évidement, pour ne donner naissance à aucun volume clos entre la lentille optique et le moyen, après avoir monté le moyen (4) sur le méplat entourant la ligne périphérique, pour éliminer un surhaussement elliptique présent sur la zone de lisière de la lentille, par un traitement thermique de la lentille optique sur laquelle repose le moyen du type d'un gabarit (4), on aplanit la zone de lisière de la lentille optique par processus de refusion, pour obtenir une forme de section transversale de lentille sphérique ou parabolique.

13. Utilisation selon la revendication 12,
**caractérisée en ce que** avec un processus de refusion constant, on obtient une forme de section transversale hyperbolique pour la lentille.
